# EUROPÄISCHE PATENTSCHRIFT

(11) **EP 1 710 893 B1**
(45) Veröffentlichungstag und Bekanntmachung des Hinweises auf die Patenterteilung: **09.07.2008**
(21) Anmeldenummer: 05007575.3
(22) Anmeldetag: 06.04.2005
(51) Int. Cl.: H02K 5/14, H02K 5/22

(54) **Bürstensystem für einen elektromotorischen Stellantrieb**
Brush-system for an electrical actuator
Système de balais pour un servomoteur électrique

(43) Veröffentlichungstag der Anmeldung: 11.10.2006
(73) Patentinhaber: SIEMENS AKTIENGESELLSCHAFT, 80333 München (DE)
(72) Erfinder: Benkert, Matthias, 97074 Würzburg (DE); Fiedler, Rudolf, 97980 Bad Mergentheim (DE); Kraft, Ekkehard, 97282 Retzstadt (DE); Przyklenk, Uwe, 97218 Gerbrunn (DE)

(56) Entgegenhaltungen:
- EP-A- 0 359 603
- EP-A- 0 538 495
- EP-A- 1 469 577
- DE-A1- 4 243 716
- DE-C1- 10 141 246
- FR-A- 625 818
- GB-A- 2 317 505
- US-A- 5 440 186
- US-A- 5 453 649
- US-A- 6 107 713
- US-A1- 2003 173 843
- US-A1- 2004 012 279
- US-B1- 6 329 735
- PATENT ABSTRACTS OF JAPAN Bd. 2003, Nr. 12, 5. Dezember 2003 (2003-12-05) & JP 2004 229420 A (MITSUBA CORP), 12. August 2004 (2004-08-12)
- PATENT ABSTRACTS OF JAPAN Bd. 005, Nr. 192 (E-085), 8. Dezember 1981 (1981-12-08) & JP 56 115158 A (YAMAMOTO KAZUKIYO), 10. September 1981 (1981-09-10)

## Beschreibung

Die Erfindung betrifft einen elektromotorischen Stellantrieb mit einem Grundkörper und einer Anzahl von dem Grundkörper aufgenommener Bürsten, mittels derer Kommutatorlamellen des elektromotorischen Stellantriebes kontaktierbar sind.

Derartige Stellantriebe werden beispielsweise in Kraftfahrzeugen als Antriebe für Schiebedächer, Fensterheber, Sitzversteller, Gurtstraffer oder dergleichen eingesetzt. Sie sind aufgrund des häufig nur geringen zur Verfügung stehenden Bauraums möglichst kompakt auszubilden und sollen kostengünstig herstellbar sein. Bei den aus dem Stand der Technik bekannten Lösungen wird zunächst das Bürstensystem auf einer Leiterplatte angelötet. Die Leiterplatte wird anschließend mit dem Bürstensystem radial zur Motorachse montiert. Dies ist nicht nur vergleichsweise aufwändig. Auch können Schwingungen am Bürstensystem auf die Leiterplatte übertragen werden, was zu einem Ausfall der Steuerelektronik führen kann.

Aus der Patentanmeldung US 2004/012279 A1 ist eine elektrische Antriebseinheit mit einem Bürstenhalter bekannt, bei dem Steckkontakte zur Ausbildung einer Steckverbindung mit entsprechend ausgebildeten Steckkontakten einer Leiterplatte vorhanden sind. Mechanische Verbindungen zwischen einem Bürstenhalter eines Antriebs und einem externen Anschlußteil, wie beispielsweise einer Leiterplatte, sind auch in den Dokumenten DE 42 43 716 A1, EP 1 469 577 A2, GB 2 317 505 A, EP 0 538 495 A1 und US 6,107,713 beschrieben. Bei allen diesen Lösungen kommt es jedoch zu einer ungewollten Übertragung von Schwingungen zwischen dem Bürstenhalter einerseits und der Leiterplatte oder dergleichen andererseits.

Eine Aufgabe der vorliegenden Erfindung ist es daher, einen elektromotorischen Stellantrieb bereitzustellen, bei der weniger Schwingungen übertragen werden. Diese Aufgabe wird durch die Merkmale des Patentanspruchs 1 gelöst.

Erfindungsgemäß ist ein elektromotorischer Stellantrieb mit einem Motor, mit einem Anschlussteil und mit einem mit dem Anschlußteil verbindbaren Bürstensystem vorgeschlagen, wobei sich das Bürstensystem durch wenigstens ein mechanisches Kontaktelement zur Bereitstellung einer externen Schnittstelle auszeichnet. Die externe Schnittstelle dient zur Herstellung einer elektrischen Verbindung zwischen dem Bürstensystem und einem Anschlussteil außerhalb des Bürstensystems, beispielsweise einer Leiterplatte. Durch die externe Schnittstelle am Bürstensystem ist dieses unabhängig von dem Anschlussteil montierbar. Mit anderen Worten kann der Zusammenbau des elektromotorischen Stellantriebes in getrennt voneinander ausgeführten Montageschritten erfolgen. So kann die externe Schnittstelle als Kundenschnittstelle eingesetzt werden. Der elektromotorische Stellantrieb kann bereits fertig vormontiert bereitgestellt werden. Zu einem späteren Zeitpunkt wird dann entsprechend den Anforderungen des jeweiligen Anwendungsfalles ein entsprechendes Anschlussteil an die externe Schnittstelle angeschlossen und der elektromotorische Stellantrieb somit vervollständigt.

Ein weiterer Vorteil besteht darin, dass das Bürstensystem im Vorfeld nicht mit dem Anschlussteil verbunden werden muss. Insbesondere wenn es sich bei dem Anschlussteil um eine Leiterplatte handelt, war dies immer sehr aufwändig, da es sich bei dem Bürstensystem um ein in den Maßstäben der Elektronikfertigung gesehen vergleichsweise großes Bauteil handelt.

Ein weiterer Vorteil der Entkopplung von Bürstensystem und Anschlussteil besteht darin, dass das Bürstensystem im Vergleich zu den aus dem Stand der Technik bekannten Lösungen genauer zur Motorwelle platziert werden kann. Insbesondere können radiale Toleranzen zwischen dem Bürstensystem und dem Anschlussteil durch den Aufbau der externen Schnittstelle ausgeglichen werden.

Das Bürstensystem kann in radialer Richtung zu dem auf einer Antriebswelle befestigten Kommutator in den Stellantrieb eingeführt werden. Dies ermöglicht eine sehr kompakte Ausbildung des elektromotorischen Stellantriebes, eine einfache Ausbildung des Gehäuses und eine vereinfachte Montage des Bürstensystems bei der Herstellung des Stellantriebes.

Aufgrund der modularen Bauart ist zudem eine effektive Schwingungsentkopplung zwischen Bürstensystem und Anschlussteil erreichbar, so dass eine Übertragung von Schwingungen auf das Anschlussteil stark verringert werden kann. Aus diesem Grund ist es möglich, viele Teile aus preiswertem vorzugsweise gespritzten Kunststoffmaterial herzustellen, trotzdem diese Kunststoffteile im allgemeinen Schwingungen sehr gut übertragen können. Aufgrund der Entkopplung können die sonst auftretenden Vibrationen des elektromotorische Stellantrieb im Betrieb und die damit verbundenen Geräusche stark verringert oder vollständig vermieden werden. Dies ermöglicht eine deutliche Erhöhung des Nutzerkomforts, insbesondere bei einem Einsatz des Stellantriebs in einem Kraftfahrzeug.

Die Schwingungsentkopplung wird erfindungsgemäß durch den Einsatz eines Dämpfungselementes zwischen dem Anschlußteil und dem Grundkörper des Bürstensystems erreicht.

Vorteilhafte Ausführungsformen der Erfindung sind in den Unteransprüchen angegeben.

Insbesondere ist die externe Schnittstelle derart ausgeformt, dass die elektrische Verbindung zu dem Anschlussteil unter Ausbildung einer kraft- und/oder formschlüssigen Verbindung herstellbar ist. Da mit anderen Worten keine stoffschlüssige Verbindung zum Zusammenbau des elektromotorischen Stellantriebes erforderlich ist, wie etwa Schweißen, Löten, Kleben oder dergleichen, ist die Handhabung eines solchen Bürstensystems besonders einfach. Eine besonders sicherere und dennoch konstruktiv einfache elektrische Kontaktierung kann durch Verwendung einer Steckverbindung hergestellt werden. Darüber hinaus sind jedoch auch andere kraft- und/oder formschlüssige Verbindungen einsetzbar, wie beispielsweise Rast-, Schnapp- und andere Feder- oder Keilverbindungen. Auch die Verwendung einer Schraubverbindung ist möglich. Ist die kraft- und/oder formschlüssige Verbindung lösbar ausgeführt, so können die Vorteile des modularen Aufbaus auch im Fall des Austausches von Bauteilen genutzt werden. Im Wartungs- oder Fehlerfall können Bürstensystem und Anschlussteil unabhängig voneinander gewechselt werden.

Besonders vorteilhaft ist es, wenn die Übertragung von Schwingungen von dem Bürstensystem auf das Anschlussteil reduziert sind. Zu diesem Zweck werden insbesondere die Schwingungen, die durch das Schleifen der Bürsten über die Kommutatorlamellen bei laufendem Stellantrieb entstehen, gedämpft. Neben dem Einsatz eines Dämpfungselementes zwischen dem Anschlußteil und dem Grundkörper des Bürstensystems erfolgt vorzugsweise der Einsatz eines Dämpfungselementes zwischen dem mechanischen Kontaktelement und dem Grundkörper des Bürstensystems. Darüber hinaus kann auch die elektrische Verbindung zwischen dem mechanischen Kontaktelement und den anderen elektrischen Bauteilen des Bürstensystems (Drossel, Bürste) mit Hilfe eines entsprechenden Verbindungselementes schwingungsentkoppelt sein.

Als Anschlussteil findet vorzugsweise eine Leiterplatte Verwendung. Auf dieser können elektrische bzw. elektronische Komponenten zur Antriebssteuerung vorgesehen sein, beispielsweise ein Mikrokontroller. Ist eine Ansteuerelektronik nicht erforderlich, beispielsweise weil für den Stellantrieb keine aufwändigen Ansteuerfunktionen bereitgestellt werden müssen, kann das Anschlussteil auch als vorzugsweise umspritztes Stanzgitter oder dergleichen ausgeführt sein. Mit anderen Worten ist das Anschlussteil dann als einfacher elektrischer Kontakt oder als elektrischer Kontakt mit Ein-/Aus-Schalter ausgebildet. An dem Anschlussteil ist vorzugsweise eine Steckverbindung vorgesehen, der zum Anschluss eines kunden spezifischen Kabelbaums oder dergleichen dient. Alternativ dazu ist das Anschlussteil selbst bereits als Stecker ausgeführt.

Die Erfindung wird nachfolgend anhand eines Ausführungsbeispieles beschrieben, das mit Hilfe von Zeichnungen näher erläutert wird. Hierbei zeigen:
- FIG 1: einen Schnitt durch einen elektromotorischen Stellantrieb in Explosionsdarstellung,
- FIG 2: eine Explosionsdarstellung eines elektromotorischen , Stellantriebes in perspektivischer Ansicht,
- FIG 3: einen Schnitt durch einen elektromotorischen Stellantrieb in zusammengebautem Zustand,
- FIG 4: eine Draufsicht auf einen elektromotorischen Stellantrieb ohne Abdeckung,
- FIG 5: eine Detailansicht einer externen Schnittstelle,
- FIG 6: eine Detailansicht einer weitere externen Schnittstelle.

Funktions- und Benennungsgleiche Teile sind in den Figuren durchgehend mit gleichen Bezugszeichen gekennzeichnet.

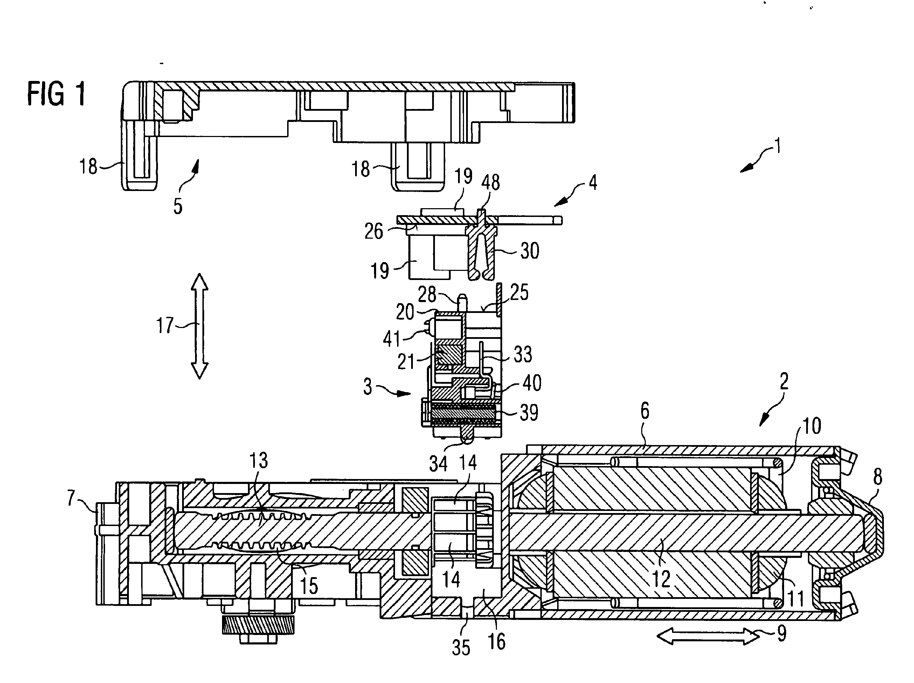

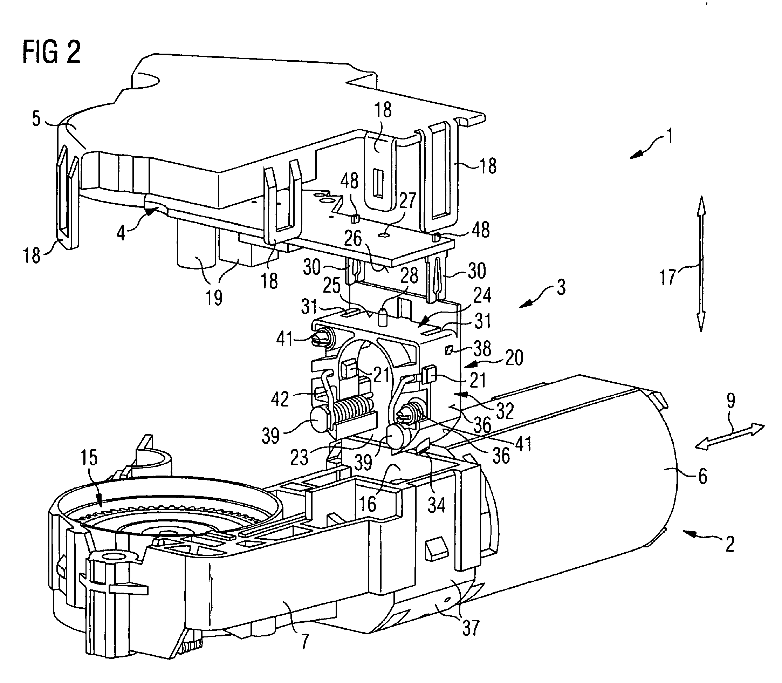

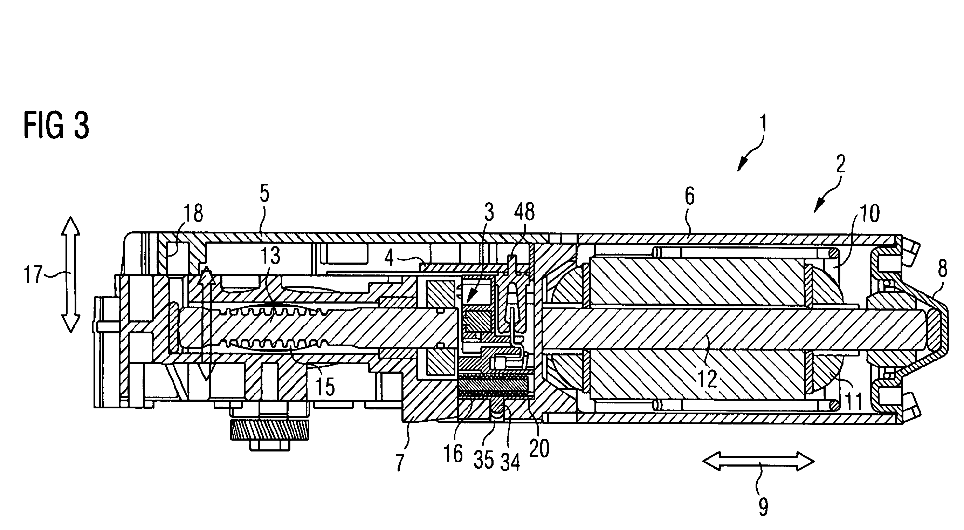

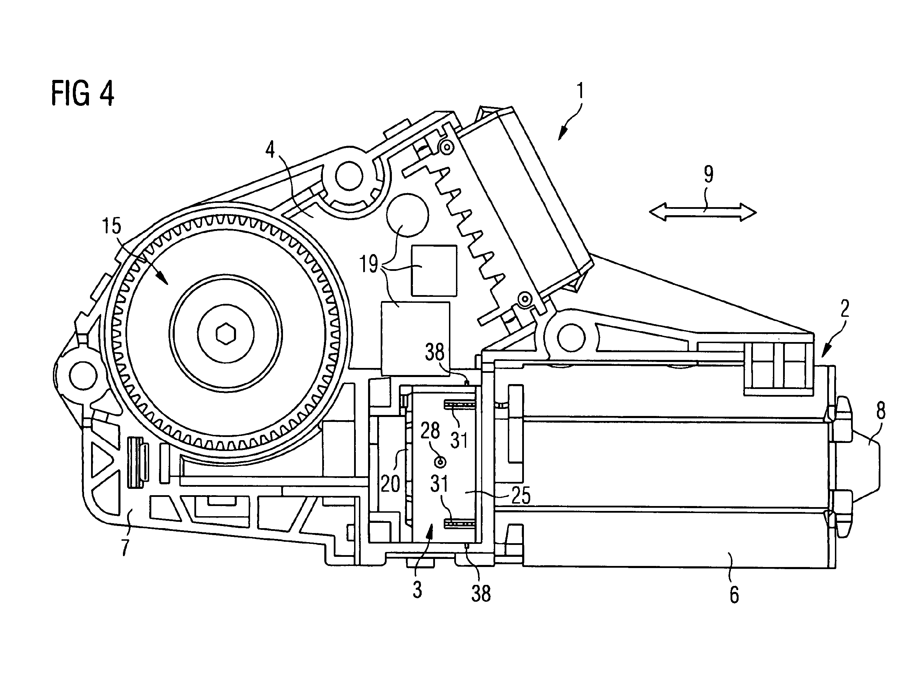

Der in den FIG 1 bis 4 abgebildete elektromotorische Stellantrieb 1 besteht im wesentlichen aus einer Motorbaugruppe 2, einem Bürstensystem 3, einer elektrischen Leiterplatte 4 sowie einer Abdeckung 5. Die Motorbaugruppe 2 umfasst ein Motorgehäuse 6, an das sich ein Getriebegehäuse 7 anschließt. Das Motorgehäuse 6 ist endseitig mit einem Motorgehäusedeckel 8 versehen.

Das Getriebegehäuse 7 nimmt ein Getriebe 15 auf. Das Motorgehäuse 6 ist so ausgebildet, dass ein Motor in axialer Richtung 9 einführbar ist. Der Motor ist vorzugsweise ein permanent erregter Gleichstrommotor. In dem als Polgehäuse dienenden Motorgehäuse 6 sind Permanentmagnete 10 angeordnet. Ferner weist der Motor einen Anker 11 auf, der mit Spulen versehen ist. Der Anker umfasst weiterhin eine Ankerwelle 12, die mit einer Schnecke 13 gekoppelt oder einstückig mit dieser ausgebildet ist. Die Schnecke 13 greift in ein Schneckenrad des Getriebes ein. Darüber hinaus ist auf der Ankerwelle 12 ein Kommutator mit Kommutatorlamellen 14 angeordnet. Die Kommutatorlamellen 14 sind mit entsprechend zugeordneten Spulen des Ankers elektrisch verbunden.

Auf der dem Getriebe zugewandten Antriebsseite des Motors ist als Teil des Getriebegehäuses 7 ein Aufnahmeraum 16 für das Bürstensystem 3 vorgesehen.

Zum Zusammenbau des Stellantriebs 1 wird das Bürstensystem 3 in den Aufnahmeraum 16 der bereits fertig montierten Motorbaugruppe 2 in radialer Richtung 17, also radial zur Ankerwelle 12, eingeführt. Anschließend kann die so komplettierte Motorbaugruppe (mit oder ohne montierter Abdeckung) beispielsweise zu einem Anwender transportiert werden. Dieser nutzt die in dem Bürstensystem 3 bereitgestellte externe Schnittstelle zum Anschluss der Leiterplatte 4. Die Leiterplatte 4 wird dabei, wie weiter unten detailliert beschrieben werden wird, in radialer Richtung 17 auf das Bürstensystem 3 aufgesteckt. Die Abdeckung 5 dient zum Verschließen des Getriebegehäuses 7 nach der Montage von Bürstensystem 3 und Leiterplatte 4 und weist hierzu Rastelemente 18 in Form von federnden Rast- oder Schnapphaken auf.

Die als Anschlussteil dienende elektrische Leiterplatte 4 ist mit einer Steckeraufnahme (nicht abgebildet) gekoppelt zum Anschluss an einen kundenspezifischen Kabelbaum. Die Leiterplatte 4 dient als Basis für eine elektronische Schaltung zur Steuerung des Stellantriebes 1 und ist zu diesem Zweck mit einer Anzahl elektrischer und elektronischer Bauelemente 19 bestückt.

Das von der Leiterplatte 4 getrennt und unabhängig hiervon handhabbare Bürstensystem 3 besteht im Wesentlichen aus einem Grundkörper 20 und in entsprechenden Bürstenkammern vorgesehenen Bürsten 21. Der Grundkörper 20 des Bürstensystems 3 weist eine U-förmige Aussparung 23 zur Positionierung am Kommutator auf. Ferner ist auf der Außenseite des am U-Grundes 24 eine Auflagefläche 25 vorgesehen, mit der der Grundkörper 20 auf der Leiterplatte 4 aufliegt, wenn er mit dieser verbunden ist. Im Bereich der für die Auflage des Grundkörpers 3 vorgesehenen Auflagefläche 26 der Leiterplatte 4 weist diese eine Bohrung 27 auf, durch die ein Halte- und Zentrierzapfen 28 eingeführt werden kann, der sich aus der Auflagefläche 25 des Grundkörpers 20 heraus erstreckt.

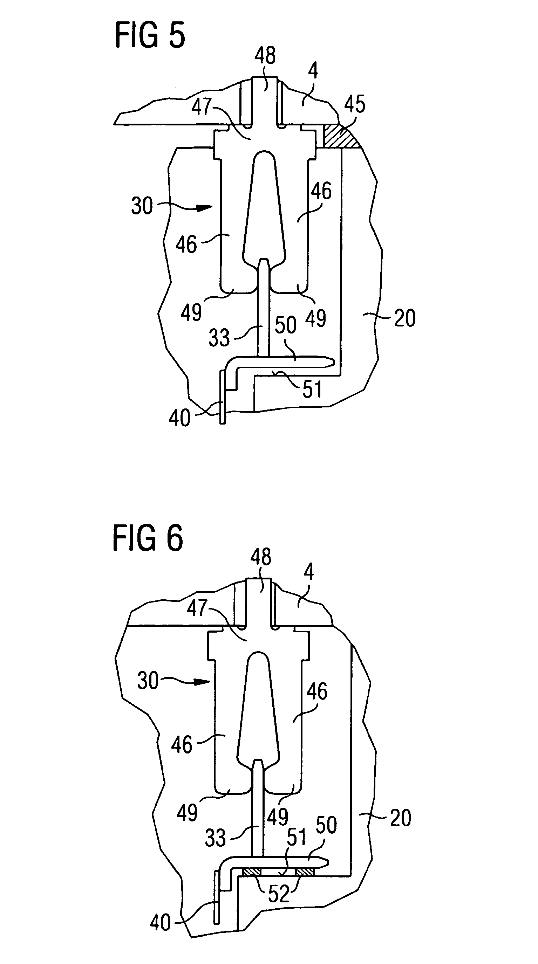

Die elektrische Kontaktierung zwischen Leiterplatte 4 und Bürstensystem 3 erfolgt mit Hilfe zweier an der Leiterplatte 4 befestigten, insbesondere angelöteten Kontaktzangen 30, die in entsprechende Aufnahmeschlitze 31 in den U-Schenkeln 32 des Grundkörpers 20 einführbar sind und dort Kontaktzungen 33 des Bürstensystems 3 kontaktieren. Die hierdurch ausgebildete externe Schnittstelle des Bürstensystems 3 ist im Zusammenhang mit den FIG 5 und 6 detailliert beschrieben.

An den freien Enden der U-Schenkel 32 sind Zentrierzapfen 34 angeordnet, die bei der Montage des Bürstensystems 3 in Ausnehmungen 35 im Getriebegehäuse 7 eingeführt werden. Dadurch wird auf einfache Art und Weise sichergestellt, dass die U-förmige Aussparung 23 des Grundkörpers 20 bei der Montage nicht zusammengedrückt wird. Darüber hinaus wird mit Hilfe der Zentrierzapfen 34 das Bürstensystem 3 axial bezogen auf die Ankerwelle 12 des Motors im Getriebegehäuse 7 fixiert. An den der Aussparung 23 gegenüberliegenden Außenseiten der U-Schenkel 32 sind Auflageflächen 36 ausgebildet, mit denen der Grundkörper 20 im montierten Zustand auf der Innenseite der Wandung 37 des Getriebegehäuses 7 aufliegt. Die Auflageflächen 36 gewährleisten eine zusätzliche Zentrierung des Grundkörpers 20 in dem Getriebegehäuse 7 und stellen damit eine präzise Montage des Bürstensystems 3 in dem elektromotorischen Stellantrieb 1 sicher. Zusätzlich wird das Bürstensystem 3 in dem Aufnahmeraum 16 durch Rastelemente 38 gehalten, die an den Auflageflächen 36 angeordnet sind und mit entsprechenden (nicht abgebildeten) Rastelementen an der Innenseite der_Wandung 37 zusammenwirken.

Der Grundkörper 20 weist Aufnahmen für elektrische Drosseln 39 auf. Diese Drosseln 39 sind im montierten Zustand des Bürstensystems 3 elektrisch leitend mit entsprechenden Anschlüssen auf der Leiterplatte 4 verbunden. Die Verbindung wird über die Kontaktzungen 33 des Bürstensystems 3 und die Kontaktzangen 30 der Leiterplatte 4 hergestellt. Dabei sind die Drosseln 39 über flexible Drosselleitungen 40 mit den Kontaktzungen 33 des Bürstensystems 3 verbunden.

Im fertig montiertem Zustand des Bürstensystems 3 in dem Stellantrieb 1 werden die in den Bürstenkammern angeordneten Bürsten 21 von jeweils einer Schenkelfeder 41 gegen die Kommutatorlamellen 14 des Kommutators gedrückt. Die Bürsten 21 sind vorzugsweise mittels einer flexiblen Litze 42 mit den Drosseln 39 elektrisch leitend verbunden. Am Grundkörper 20 sind domartige Federhalter für die Schenkelfedern 41 ausgebildet.

Die Montageposition der Bürsten 21 ist vorteilhaft so angegeben, dass die Bürsten 21 in einem vorgegebenen Abstand zu den Kommutatorlamellen 14, arretiert sind, wenn das Bürstensystem 3 in das Getriebegehäuse 7 eingebracht wird. Dadurch kann auf einfache Art und Weise sichergestellt werden, dass das Bürstensystem 3 radial zu der Ankerwelle 12 in das Getriebegehäuse 7 eingebracht werden kann, wenn sich die Ankerwelle 12 bereits in dem Motorgehäuse 6 befindet. Zur Vollendung der Montage wird die Arretierung der Bürsten gelöst, so dass sie durch die Schenkelfedern 41 gegen die Kommutatorlamellen 14 des Kommutators gedrückt werden.

Zum Dämpfen von Schwingungen ist zwischen dem Grundkörper 20 des Bürstensystems 3 und der Leiterplatte 4 ein Entkopplungselement 45 angeordnet, vgl. FIG 5. Dieses Entkopplungs- oder Dämpfungselement 45 besteht vorzugsweise aus einem Elastomer. Es kann aber auch aus anderen Materialien mit entsprechender Elastizität und Dämpfungseigenschaften hergestellt sein, wie zum Beispiel NBR, Si-Elastomere oder Polyuretane.

Die Frequenz der Schwingungen, die durch den Übergang der Bürsten von einer Kommutatorlamelle 14 zur nächsten Kommutatorlamelle 14 erzeugt werden, sind abhängig von der Drehzahl des Motors und somit von der Drehzahl der Kommutatorlamellen 14. Wenn der Motor eine Drehzahl von 5000 Umdrehungen pro Minute hat und abhängig von der Last mit 3000 bis 5000 Umdrehungen pro Minute betrieben wird und einen Kommutator mit zehn Kommutatorlamellen 14 aufweist, so beträgt die Frequenz der Schwingungen zwischen 500 und 1000 hz.

Unter Schwingungsentkopplung ist in diesem Zusammenhang zu verstehen, dass Schwingungen, die durch das Schleifen der Bürsten 21 über die Kommutatorlamellen 14 des Kommutators bedingt sind, stark gedämpft werden. Die Amplitude dieser Schwingungen wird beispielsweise um mindestens 30% gedämpft.

Die mit der Leiterplatte 4 verbundenen Kontaktzangen 30 sind ebenso wie die Kontaktzungen 33 des Bürstensystems 3 aus einem vorzugsweise federnden Kontaktblech angefertigt. Die im wesentlichen U-förmig ausgebildete Kontaktzange 30 weist dabei als U-Schenkel zwei Kontaktarme 46 auf, die sich ausgehend von dem als U-Grund dienenden Anschlussbasis 47 im wesentlichen senkrecht von der Leiterplatte 4 weg erstrecken. Die Anschlussbasis 47 weist einen Kontaktpin 48 auf, der in der Leiterplatte 4 verlötet ist. Die Kontaktarme 46 weisen an ihren Freienden aufeinander zu gerichtete Kontaktfinger 49 auf, die bei einer Kontaktierung der Kontaktzunge 33 auffedern und nach Art einer Zange die Kontaktzunge 33 zwischen sich verklemmen und somit eine lösbare Steckverbindung ausbilden. Die sich im Montagezustand des Bürstensystems 3 im wesentlichen senkrecht auf die Leiterplatte 4 zu erstreckende plattenförmige Kontaktzunge 33 wird mit anderen Worten im Bereich ihrer freien Enden beidseitig kontaktiert, so dass eine besonders sichere elektrische Verbindung gegeben ist. Im Fußbereich der Kontaktzunge 33 ist diese mit einem Trägerelement 50 verbunden, welches im nicht angeschlossenen Zustand auf einer hierfür vorgesehenen Ablagefläche 51 des Grundkörpers 20 aufliegt und sich daran abstützt.

Bei der Kontaktierung von Kontaktzange 30 und Kontaktzunge 33 wird das Trägerelement 50 vom Grundkörper 20 des Bürstensystems 3 leicht durch die Rückverformung des Entkopplungselementes 45 abgehoben, so dass keine direkte mechanische Kopplung von der Kontaktzunge 33 zu dem Grundkörper 20 mehr besteht. Die mit dem Trägerelement 50 verbundene Drosselleitung 40 besteht vorzugsweise aus einer großen Anzahl kleiner dünner und nicht isolierter Litzen, die keinen Körperschall übertragen. Die Drosselleitung 40 ist an dem Trägerelement 50 derart befestigt, beispielsweise angelötet oder angeschweißt, dass sie als flexibles und bewegliches Verbindungselement zur Schwingungsentkopplung dient.

Zusätzlich zu dem Entkopplungselement 45 zwischen dem Grundkörper 20 und der Leiterplatte 4 oder aber als alleiniges Entkopplungselement des Bürstensystems 3 kann eine Anzahl von zwischen dem Grundkörper 20 und der Kontaktzunge 33 beziehungsweise dem Trägerelement 50 angeordneten Entkopplungs- oder Dämpfungselementen 52 dienen, wie sie beispielhaft in FIG 6 dargestellt sind.

Durch weitere Entkopplungs- oder Dämpfungselemente (nicht abgebildet) kann auch eine mechanische Entkopplung zwischen dem Bürstensystem 3 und dem Getriebegehäuse 7 erfolgen. Diese zusätzlichen Dämpfungselemente sind vorzugsweise direkt am Grundkörper 20 des Bürstensystems 3 angeordnet.

Die Verwendung von Entkopplungs- oder Dämpfungselementen dient der Schwingungsentkopplung von Motorbaugruppe 2 und Bürstensystem 3 beziehungsweise Bürstensystem 3 und Leiterplatte 4. Aufgrund des präzisen Sitzes des Bürstensystems 3 im Getriebegehäuse 7 und der Schwingungsentkopplung können Vibrationen und Geräuschemmisionen stark verringert werden.

## Patentansprüche

1. Elektromotorischer Stellantrieb (1)
- mit einem Motor,
- mit einem Anschlussteil (4) und
- mit einem mit dem Anschlußteil (4) verbindbaren Bürstensystem (3) mit einem Grundkörper (20) und einer Anzahl von dem Grundkörper (20) aufgenommener Bürsten (21), mittels derer Kommutatorlamellen (14) des elektromotorischen Stellantriebes (1) kontaktierbar sind, und mit wenigstens einem mechanischen Kontaktelement (33) zur Bereitstellung einer externen Schnittstelle für eine elektrische Verbindung zwischen den Bürsten (21) und dem Anschlussteil (4), **dadurch gekennzeichnet, dass** der Grundkörper (20) des Bürstensystems (3) über mindestens ein Dämpfungselement (45) von dem Anschlussteil (4) schwingungsentkoppelt ist.

2. Elektromotorischer Stellantrieb (1) nach Anspruch 1, **dadurch gekennzeichnet, dass** das wenigstens eine mechanische Kontaktelement (33) derart ausgebildet ist, dass die elektrische Verbindung unter Ausbildung einer kraft- und/oder formschlüssigen Verbindung herstellbar ist.

3. Elektromotorischer Stellantrieb (1) nach Anspruch 2, **dadurch gekennzeichnet, dass** die kraft und/oder formschlüssige Verbindung lösbar ist.

4. Elektromotorischer Stellantrieb (1) nach einem der Ansprüche 1 bis 3, **dadurch gekennzeichnet, dass** die elektrische Verbindung eine Steckverbindung ist.

5. Elektromotorischer Stellantrieb (1) nach einem der Ansprüche 1 bis 4, **dadurch gekennzeichnet, dass** das wenigstens eine mechanische Kontaktelement (33) über mindestens ein Dämpfungselement (52) von dem Grundkörper (20) schwingungsentkoppelt ist.

6. Elektromotorischer Stellantrieb (1) nach einem der Ansprüche 1 bis 5, **dadurch gekennzeichnet, dass** das wenigstens eine mechanische Kontaktelement (33) über ein elektrisches Verbindungselement (40) von den übrigen elektrischen Bauteilen (39) des Bürstensystems (3) schwingungsentkoppelt ist.

7. Elektromotorischer Stellantrieb (1) nach einem der Ansprüche 1 bis 6, **dadurch gekennzeichnet, dass** das Anschlussteil (4) eine Leiterplatte ist.

8. Elektromotorischer Stellantrieb (1) nach einem der Ansprüche 1 bis 6, **dadurch gekennzeichnet, dass** das Anschlussteil (4) ein Stanzgitter oder dergleichen ist.

## Claims

1. Electric actuator (1) having
- a motor
- a connecting element (4) and
- a brush system (3), which can be connected to the connecting element (4), comprising a base body (20) and a number of brushes (21) accommodated in the base (20), by means of which commutator lamellae (14) of the electric actuator (1) are able to be contacted, and comprising at least one mechanical contact element (33) for providing an external interface for an electrical connection between the brushes (21) and the connecting element (4), **characterised in that** the base body (20) of the brush system (3) is uncoupled from vibrations via at least one damping element (52) from the connecting element (4).

2. Electric actuator (1) according to claim 1, **characterised in that**, at least one mechanical contact element (33) is configured in such a way that the electrical connection can be established by forming an interference-fit and/or close-fit connection.

3. Electric actuator (1) according to claim 2, **characterised in that**, the interference-fit and/or close-fit connection can become undone.

4. Electric actuator (1) according one of claims 1 to 3, **characterised in that**, the electrical connection is a plug-type connector.

5. Electric actuator (1) according to one of claims 1 to 4, **characterised in that**, at least one mechanical contact element (33) is uncoupled from vibrations via at least one damping element (52) from the base (20).

6. Electric actuator (1) according to one of the claims 1 to 5, **characterised in that**, at least one mechanical contact element (33) is uncoupled from vibrations via an electrical connecting element (40) from the remaining electrical components (39) of the brush system (3).

7. Electric actuator (1) according to one of claims 1 to 6, **characterised in that**, the connecting element (4) is a printed circuit board.

8. Electric actuator (1) according to one of claims 1 to 6, **characterised in that**, the connecting element (4) is a punched grid or the like.

## Revendications

1. Actionneur à moteur électrique (1), comprenant
- un moteur,
- une pièce de raccordement (4) et
- un système de balais (3) pouvant être raccordé à la pièce de raccordement (4) et comprenant un corps de base (20) et un nombre de balais (21) reçus dans le corps de base (20) et pouvant entrer en contact avec des lamelles de commutateur (14) de l'actionneur à moteur électrique (1), et au moins un élément de contact mécanique (33) fournissant une interface externe en vue d'une connexion électrique entre les balais (21) et la pièce de raccordement (4), **caractérisé en ce que** le corps de base (20) du système de balais (3) est découplé en vibrations de la pièce de raccordement (4) par au moins un élément amortisseur (45).

2. Actionneur à moteur électrique (1) selon la revendication 1, **caractérisé en ce que** le au moins un élément de contact (33) est agencé de façon telle que la connexion électrique peut être établie par liaison à conjugaison de force et/ou de forme.

3. Actionneur à moteur électrique (1) selon la revendication 2, **caractérisé en ce que** la liaison par conjugaison de force et/ou de forme est amovible.

4. Actionneur à moteur électrique (1) selon l'une des revendications 1 à 3, **caractérisé en ce que** la connexion électrique est une connexion enfichable.

5. Actionneur à moteur électrique (1) selon l'une des revendications 1 à 4, **caractérisé en ce que** le au moins un élément de contact mécanique (33) est découplé en vibration du corps de base (20) par au moins un élément amortisseur (52).

6. Actionneur à moteur électrique (1) selon l'une des revendications 1 à 5, **caractérisé en ce que** le au moins un élément de contact mécanique (33) est découplé en vibration des composants électriques restants (39) du système de balais (3) par un élément de connexion électrique (40).

7. Actionneur à moteur électrique (1) selon l'une des revendications 1 à 6, **caractérisé en ce que** la pièce de raccordement (4) est une platine à circuit imprimé.

8. Actionneur à moteur électrique (1) selon l'une des revendications 1 à 6, **caractérisé en ce que** la pièce de raccordement (4) est un grillage estampé ou similaire.
